(19) 

 **Europäisches Patentamt**
 **European Patent Office**
 **Office européen des brevets**

(11) **EP 4 481 364 B1**

(12) **EUROPEAN PATENT SPECIFICATION**

(45) Date of publication and mention
of the grant of the patent:
**18.03.2026  Bulletin 2026/12**

(21) Application number: **23382643.7**

(22) Date of filing: **23.06.2023**

(51) International Patent Classification (IPC):
***G01N 15/04*** *(2006.01)*

(52) Cooperative Patent Classification (CPC):
**G01N 15/04; G01N 27/72**

(54) **METHOD AND APPARATUS FOR MEASURING THE CAPACITY OF ADSORBENT MATERIALS TO ABSORB SUBSTANCES DISSOLVED IN A LIQUID MEDIUM**

**VERFAHREN UND VORRICHTUNG ZUR MESSUNG DER KAPAZITÄT VON ADSORPTIONSMITTELN ZUR ABSORPTION VON IN EINEM FLÜSSIGEN MEDIUM GELÖSTEN SUBSTANZEN**

**PROCÉDÉ ET DISPOSITIF POUR MESURER LA CAPACITÉ D'ABSORBANTS À ABSORBER DES SUBSTANCES DISSOUTES DANS UN MILIEU LIQUIDE**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(43) Date of publication of application:
**25.12.2024  Bulletin 2024/52**

(73) Proprietors:
• **Universidad del País Vasco/Euskal Herriko Unibertsitatea**
**48940 Leioa, Vizcaya (ES)**
• **Universidad de Cantabria**
**39005 Santander, Cantabria (ES)**

(72) Inventors:
• **Pérez Aguirre, Rubén**
**48940 Leioa, BIZKAIA (ES)**
• **Castillo García, Oscar**
**48940 Leioa, BIZKAIA (ES)**
• **Beobide Pacheco, Garikoitz**
**48940 Leioa, BIZKAIA (ES)**
• **De Pedro del Valle, Manuel**
**39005 SANTANDER, CANTABRIA (ES)**
• **Fernández Barquín, Luis**
**39005 SANTANDER, CANTABRIA (ES)**
• **Rodríguez Fernández, Jesús María**
**39005 SANTANDER, CANTABRIA (ES)**

(74) Representative: **Balder IP Law, S.L.**
**Paseo de la Castellana 93**
**5ª planta**
**28046 Madrid (ES)**

(56) References cited:
• **BARROSO NAGORE ET AL: "Magnetic sustentation as an adsorption characterization technique for paramagnetic metal-organic frameworks", COMMUNICATIONS CHEMISTRY, vol. 6, no. 1, 5 January 2023 (2023-01-05), XP93100585, Retrieved from the Internet <URL:https://www.nature.com/articles/ s42004-022-00799-w> DOI: 10.1038/ s42004-022-00799-w**
• **BARROSO GARC�A NAGORE: "A STUDY OF METAL-ORGANIC FRAMEWORK SORPTION PHENOMENA IN SOLUTION", 4 May 2023 (2023-05-04), pages 1 - 197, XP93100647, Retrieved from the Internet <URL:https://addi. ehu.es/handle/10810/61382> [retrieved on 20231113]**

- PASCUAL-COLINO JON ET AL: "An in solution adsorption characterization technique based on the response to an external magnetic field of porous paramagnetic materials: application on supramolecular metal-adenine frameworks containing heterometallic heptameric clusters", INORGANIC CHEMISTRY FRONTIERS, 11 April 2023 (2023-04-11), London, XP93100568, Retrieved from the Internet <URL:https://pubs.rsc.org/en/content/articlelanding/2023/QI/D2QI01994A> [retrieved on 20231113], DOI: 10.1039/d2qi01994a

**Description**

**TECHNICAL FIELD**

The invention can be framed in the area of chemistry and in the technical field dedicated to the development of scientific instrumentation.

The invention relates to a method and a device for measuring the capacity of adsorbent materials to absorb chemical substances dissolved in a liquid medium.

One of the objects of the invention is to provide a method and a device for the measurement of adsorption in adsorbent materials of chemical substances dissolved in a liquid medium, which is based on the direct measurement of a parameter for the determination of the amount of adsorbed mass. This does not require prior characterization of the variation of a magnetic field. The device is capable of operating autonomously (i.e., without the need to be provided with a power supply and a cooling circuit) for its application in the determination of adsorption in adsorbent solids.

**STATE OF THE ART**

Adsorption is widely used for different purposes due to the advantages it offers, such as low-cost and high efficiency. For decades, a lot of effort has been concentrated on finding suitable adsorbents, but a few works have focused on developing suitable direct characterization techniques for adsorption processes in solution that do not rely on specific physicochemical properties of the adsorbate. The greatest advantages of adsorption in the removal and purification of chemicals are the low-cost, high efficiency and ease of operation comparing to conventional methods such as chemical precipitation, ion exchange, liquid extraction or filtration and the considerable variety of adsorbents available. For this reason, adsorption is a widely used process in different industrial and environmental protection applications such as catalysis, storage and purification of water and air. Therefore, adsorption capacity, kinetics and enthalpy are widely studied in order to analyze and evaluate the performance of the adsorbents.

Nowadays, the quantification of the adsorption of chemical species dissolved in a liquid medium is mostly carried out indirectly, using instruments that determine the variation of the concentration of the chemical species of interest in the solution, and not in the adsorbent support. These instruments include a wide variety of common analytical equipment that are chosen according to the problem to be analyzed, and are also capable of continuous or semi-continuous liquid phase analysis. Examples include HPLC-UV, GC-MS, GC-FID, ICP-AES, NMR, etc.

Although it is possible to extract the content of the adsorbent solid a posteriori, by extracting and analyzing the species of interest, there is no known universal technique that allows the adsorption process to be monitored directly on the solid.

Some studies analyze the adsorption of chemical species (drugs, alcohols...) on an adsorbent using the magnetic lift provided by an electromagnet. In this procedure, the variation of the current that feeds the electromagnet makes it possible to vary the magnetic field that supports the adsorbent solid contained in a liquid medium (water or other solvent). This allows to observe the critical magnetic field in which the solid detaches and falls down. The value of the critical magnetic field depends on the adsorbed mass and, therefore, the adsorption of the chemical species of interest can be determined from its value.

It should be noted that this technique determines the ratio of mass of the adsorbed compound with respect to the mass of the adsorbent material. This enables the measurement of the adsorbate in-situ without carrying out any manipulation of either the adsorbent material or the solution with which it is in contact, unlike other analytical techniques. It should also be stressed that it is a non-destructive technique.

The work described to date requires the use of an electromagnet, a relatively expensive element (20-30k €) which, in addition to an electrical power supply, requires a cooling system to prevent the coils from overheating. Moreover, a prior characterization of the electromagnet is necessary to determine how the magnetic field varies according to the current applied to the coils of the electromagnet.

On another note, in the vast world of porous materials used as adsorbent, an interesting class with intrinsic properties that can be directly correlated with the amount of captured adsorbate are paramagnetic Metal Organic Frameworks (MOFs). MOFs are a class of three-dimensional (3D) porous crystalline materials built from organic linkers (organic building units, OBUs) and metal centers or clusters (inorganic building units, IBUs) that are connected through strong coordination bonds. Their most outstanding properties include high and permanent porosity, large surface areas (surpassing that of the other adsorbents), structural and functional tenability, high thermal stability, tailorable pores and cavities, and high adsorption affinity.

MOFs offer the possibility to design and synthesize a targeted material with atomic precision. Thus, such materials have become very attractive, as their properties can be easily designed and tuned. Although many MOFs contain paramagnetic centers, there are very few characterization techniques that seize the advantage of their magnetic behavior to monitor the different physical/chemical parameters.

The article: Barroso Nagore ET AL: "Magnetic sustentation as an adsorption characterization technique for paramagnetic metal-organic frameworks", Communications Chemistry, vol. 6, no. 1, 5 January 2023 (2023-01-05), XP93100585, DOI: 10.1038/s42004-022-00799-w. Retrieved from the Internet: URL:https://www.nature.com/articles/ s420014-022-00799-w, relates to a method for measuring the absorption capacity of adsorbent materials to adsorb substances dissolved in a liquid medium. The use of permanent magnets is not contemplated in this article.

The publication: Barroso Garcfa Nagore: "A STUOY OF METAL-ORGANIC FRAMEWORK SORPTION PHENOMENA IN SOLUTION", 4 May 2023 (2023-05-04), pages 1-197, XP93100647. Retrieved from the Internet: URL:https://addi.ehu.es/handle/10810/61382 [retrieved on 2023-11-131, is an extension of the above-identified article.

## DESCRIPTION OF THE INVENTION

The present invention provides a method and a device based on a maintenance-free permanent magnet capable of operating autonomously (i.e., without the need to be provided with a power supply and cooling circuit) for its application in the determination of adsorption on adsorbent solids. The scientific grounds are based on a linear correlation between a physical parameter, directly measurable, for example the separation distance between a permanent magnet and a recipient containing a liquid medium with magnetically active particles, and the amount of adsorbed mass. In other words, it does not require a prior characterization of the field variation, as is the case with an electromagnet.

More specifically, one aspect of the invention relates to a method for measuring the capacity of adsorbent materials to absorb substances dissolved in a liquid medium, wherein the method comprises:

providing a recipient containing a liquid medium with particles of an adsorbent material with positive magnetic susceptibility (magnetically active), and a substance dissolved in the liquid medium,

placing the recipient in proximity to at least one permanent magnet so that the magnetically active particles are retained in the liquid medium by the magnetic attraction of the permanent magnet,

increasing the separation distance between the permanent magnet and the recipient until the magnetic attraction of the permanent magnet no longer holds the magnetically active particles,

measuring the separation distance between the permanent magnet and the recipient at which all or a predetermined amount of the magnetically active particles have fallen by gravity to the bottom of the recipient, and

determining, by a linear correlation, the mass of the captured substance by the magnetically active particles on the basis of the measured separation distance.

Preferably, the adsorbent material is a material endowed with porosity, relatively high surface area and positive magnetic susceptibility.

The step of increasing the separation distance between the permanent magnet and the recipient is preferably carried out by keeping the permanent magnet in a fixed position, and moving the recipient linearly with respect to the permanent magnet in a direction orthogonal to the permanent magnet.

Preferably, the recipient is a test tube which is placed between two permanent magnets facing each other, and in close proximity or in contact with one of the magnets, and in a way that the bottom of the test tube is outside the magnetic field generated by the magnet.

The equation that mediates the attraction between the particles of the magnetically active material and the magnetic field implies: $F_{magnetism} = \nabla(m \cdot H)$, where the gradient $\nabla$ is the change of the quantity $m \cdot H$ per unit distance (m magnetic dipole of the particle and $H$: external magnetic field), and the direction is that of the maximum increase of $m \cdot H$. As the magnetic dipole ($m$) of the particles is oriented in the same direction as $H$, the gradient attracts the particles towards the region of maximum $H$ field.

Since the magnetic dipole of the particles can be expressed as a function of the external magnetic field and the magnetic dipole gradient is negligible if the particles are small (< 1 mm), the magnetic dipole moment can be considered constant over the entire length of the particle and expressed as a function of the magnetic susceptibility of the particle material (Equation 1):

$$F_P = \mu_0 \frac{\chi_M}{MW} \cdot \rho_P \cdot V_P \cdot H \cdot \nabla(H_P) \qquad (1)$$

Where $F_P$ is the magnetic attraction force on the particle, $\mu_0$ the vacuum permeability, $\chi_M$ the molar susceptibility, $MW$ the molecular weight of the adsorbent structure (excluding solvent molecules located in the pores), $\rho_P$ the adsorbent

density, $V_P$ the particle volume, $H$ and $\nabla(H_p)$ the magnetic field and the field gradient at the position occupied by the particle.

The magnetic lift experiments described are the result of a balance between the three forces to which the particles of the adsorbent material are subjected: Magnetic attraction, buoyancy (flotation) and gravitational force.

Magnetic force is defined as the force that is exerted on the particle by the magnet and lifts the particle up to the bottom border of the magnet pole (zone of maximum magnetic force) (Equation 2), gravity is the opposite force that pushes down the particles (Equation 3) and the buoyancy of the liquid medium that pushes the particles up (Equation 4). The equations governing each force described above are described below.

$$F_{magnetism} = \nabla(m \cdot H) = m \cdot \nabla H = \frac{\chi_M}{MW_F} \cdot \rho_F \cdot V_F \cdot H \cdot \nabla H \quad (2)$$

$$F_{gravity} = M \cdot g = (M_F + M_M) \cdot g = (V_F \cdot \rho_F + V_M \cdot \rho_M) \cdot g \quad (3)$$

$$F_{flotation} = (V_F \cdot \rho_S + V_M \cdot \rho_S) \cdot g \quad (4)$$

In these equations, an arbitrary separation has been made between the mass, volume and density corresponding to the adsorbent material ($M_F$, $V_F$ and $\rho_F$) and those of the adsorbate ($M_M$, $V_M$ and $\rho_M$). The other parameters ($\chi_M$) being the molar susceptibility, ($H$) the magnetic field, ($H \cdot \nabla H$) the magnetic field gradient and ($g$) the acceleration of gravity of the Earth.

The value of the critical magnetic field corresponds to the value at the moment when the forces exerted on the particle are equalised (Equation 5):

$$F_{magnetism} = F_{gravity} - F_{flotation} \quad (5)$$

Replacing Equations (2-4) in Equation (5), Equation (6) is obtained:

$$\frac{\chi_M}{MW_F} \cdot \rho_F \cdot V_F \cdot H \cdot \nabla H = (V_F \cdot \rho_F + V_M \cdot \rho_M) \cdot g - (V_F \cdot \rho_S + V_M \cdot \rho_S) \cdot g \quad (6)$$

Which can be simplified and rewritten as Equation (7):

$$\frac{\chi_M}{MW_F} \cdot \rho_F \cdot H \cdot \nabla H = (\rho_F - \rho_S) \cdot g + (\rho_M - \rho_S) \cdot \frac{V_M}{V_F} \cdot g \quad (7)$$

On the other hand, $V_F$ and $V_M$ can be defined as:

$$V_F = \frac{M_F}{\rho_F} = \frac{n \cdot MW_F}{\rho_F} \quad \text{and} \quad V_M = \frac{M_M}{\rho_M} = \frac{n \cdot x \cdot MW_M}{\rho_M},$$

In order to have the ratio between the volumes of adsorbate captured ($V_M$) and sorbent ($V_F$) shown in Equation (8):

$$\frac{V_M}{V_F} = \frac{x \cdot MW_M \cdot \rho_F}{MW_F \cdot \rho_M} \quad (8)$$

Replacing Equation (8) in Equation (7) gives Equation (9):

$$\frac{\chi_M}{MW_F} \cdot \rho_F \cdot H \cdot \nabla H = (\rho_F - \rho_S) \cdot g + (\rho_M - \rho_S) \cdot \frac{x \cdot MW_M \cdot \rho_F}{MW_F \cdot \rho_M} \cdot g \quad (9)$$

Which can be rewritten as Equation (10):

$$x \cdot MW_M = \frac{\chi_M \cdot MW_F \cdot \rho_M}{MW_F \cdot (\rho_M - \rho_S) \cdot g} H \cdot \nabla H - \frac{(\rho_F - \rho_S) \cdot MW_F \cdot \rho_M}{(\rho_M - \rho_S) \cdot \rho_F} \quad (10)$$

Taking into account that all parameters are constant with the exception of "$H \cdot \nabla H$" and "$x \cdot MW_M$", the above equation can be simplified to the form of Equation (11):

$$x \cdot MW_M = A \cdot H \cdot \nabla H - B \quad (11)$$

We can define $M_{M(F)} = x \cdot MW_M$, wherein $M_{M(F)}$ is the mass of adsorbate captured per weight formula of the adsorbent to obtain Equation (12), which gives a linear relationship between the mass captured and the $H \cdot \nabla H$ to which particles fall.

$$M_{M(F)} = A \cdot H \cdot \nabla H - B \qquad (12)$$

If a magnetic field configuration that shows a linear variation of "$H \cdot \nabla H$" with respect to an easily measurable physical parameter (D) is available (Equation 13), where a and b are the corresponding constants representing the slope and y-intercept of the corresponding straight line, Equation (12) could be rewritten as Equation (14):

$$H \cdot \nabla H = a \cdot D + b \quad (13)$$

$$M_{M(F)} = aA \cdot D + bA - B \quad (14)$$

Equation (14) can be simplified further as a, b, A and B parameters are constants in the form of Equation (15):

$$M_{M(F)} = A' \cdot D - B' \quad (15)$$

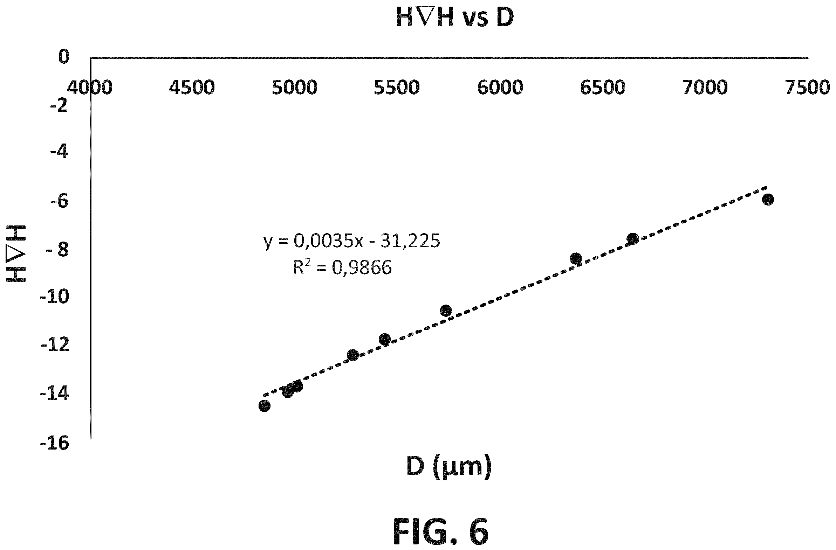

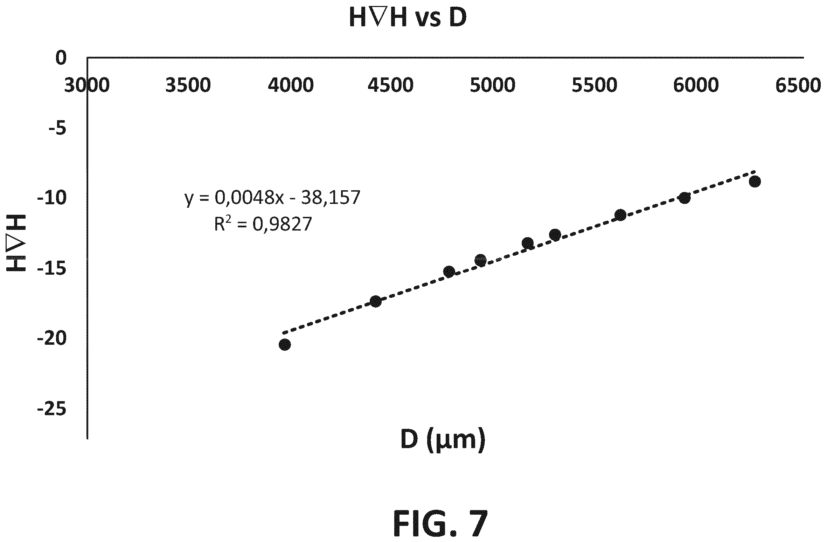

In this arrangement of permanent magnets, this physical parameter is the lateral displacement of the recipient containing the particles of adsorbent material suspended in a liquid and can be obtained directly from the reading of the actuator integrated in the equipment. This linearity remains within the ranges of displacements observed in the experimental measurements as represented in Figures 6 and 7.

Therefore, once the values of the constants A' and B' have been determined for the adsorbent used, by means of a calibration with samples with a known amount of captured mass, the equipment provides easily quantitative information on the amount of mass captured of any adsorbate by the adsorbent material.

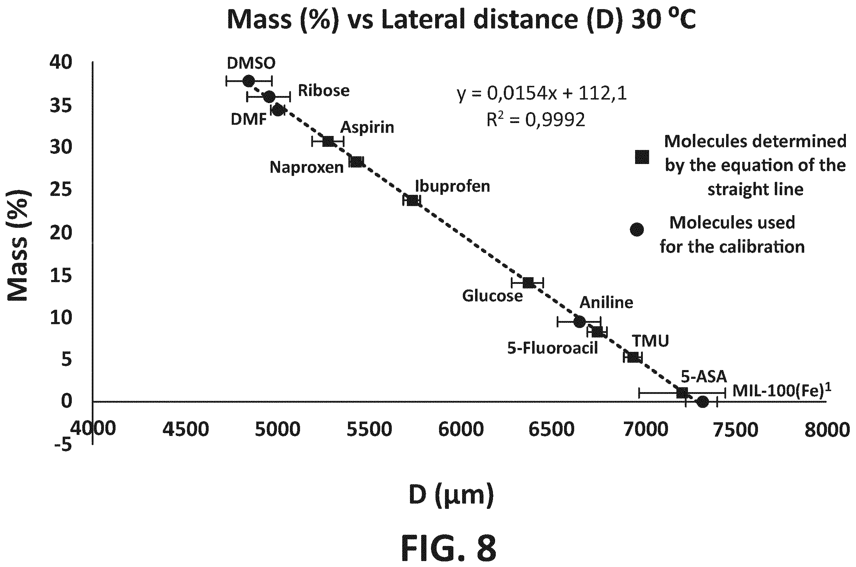

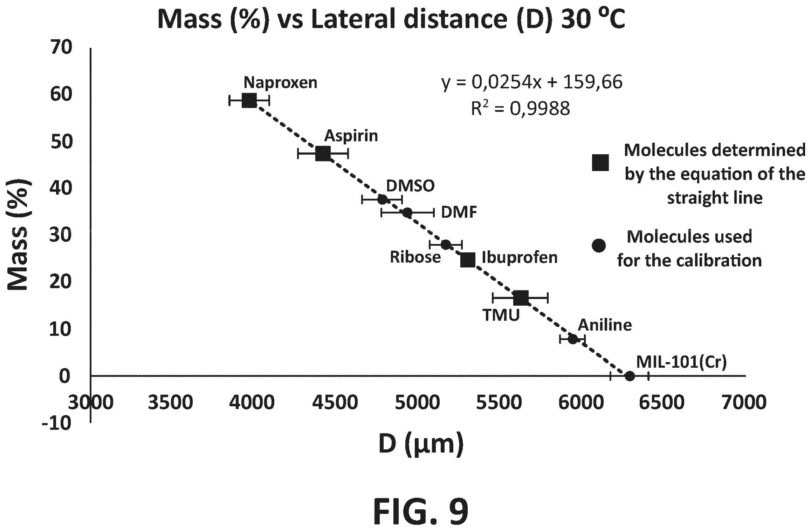

The calibration process for each adsorbent material is carried out by measuring the parameter D (lateral displacement) at which the last particles fall on the device of the invention and also for the same adsorbent materials but incorporating adsorbed molecules in a known mass amount. The captured adsorbate mass amount of the samples employed for the calibration, is calculated from the difference between the initial adsorbate containing solution concentration and the remaining one after the in-solution adsorption process. The measurement of the adsorbate concentration in the solution requires the use of analytical techniques, such as UV-Vis spectroscopy, NMR or chromatography according to the intrinsic characteristics of the adsorbate molecule. The representation of both values in a Mass (%) vs. lateral displacement (D) diagram allows to establish the calibration straight line. This result subsequently allows to quantify the percentage of adsorbate mass captured by the adsorbent directly from the reading of D parameter in this device, as represented in Figures 8 and 9.

Another aspect of the invention refers to a device for measuring the absorption capacity of adsorbent materials of substances dissolved in a liquid medium.

The device comprises:

a support of ferromagnetic material and two permanent magnets placed on the support of ferromagnetic material in such a way that they face each other, and with a gap between them,

an elongated recipient for containing a liquid medium containing magnetically active particles of an absorbing material, and

a substance dissolved in the liquid medium, and a platform configured to retain the recipient between the two permanent magnets, so that the bottom of the recipient is outside the magnetic field generated by the magnets.

The device further includes a mechanical actuator coupled to the platform and configured to move the recipient relative to the permanent magnets, and means for measuring the separation distance between the recipient and one of the magnets.

The device additionally includes computing means adapted to determine the mass of substance captured by the linear correlation in accordance with the method defined above.

**BRIEF DESCRIPTION OF THE DRAWINGS**

To complete the description and in order to provide a better understanding of the invention, a set of illustrations is provided. These form an integral part of the description and depict embodiments of the invention, which should not be interpreted as restricting the scope of the invention, but just as examples of how the invention can be implemented. The illustrations comprise the following figures:

Figure 1.- shows a perspective view of the metal frame where the permanent magnets are placed, wherein their components are shown decoupled to facilitate their identification.

Figure 2.- shows the methacrylate support attached to the mobile axis in charge of increasing or decreasing the distance between the test tube and the magnet surface.

Figure 3.- shows a view of the metal frame and magnets mounted with the methacrylate support. An enlarged view in this figure shows the methacrylate plate where the test tube is supported, which moves away from the permanent magnet thanks to the mobile axis.

Figure 4.- shows a test tube touching one of the magnets.

Figure 5.- shows how, as the test tube is displaced away, a distance is reached where the particles of the porous material fall due to the weakening of the external magnetic field, which will be characteristic of each porous material and the mass of adsorbate captured.

Figure 6.- shows a graph of the parameter H·VH (magnetic field and magnetic field gradient) versus lateral displacement (D) within the range measured for the adsorbent material MIL-100(Fe) showing the linear dependence between both parameters.

Figure 7.- shows a plot of the parameter $H \cdot \nabla H$ versus lateral displacement (D) within the range measured for the adsorbent material MIL-101(Cr) showing the linear dependence between both parameters.

Figure 8.- shows a graph of the adsorbed mass versus lateral displacement for the adsorbent material MIL-100(Fe). Molecules whose adsorbed mass has been corroborated by another analytical technique to determine the equation of the line are identified with a circle, while molecules whose mass has been determined by the extrapolation of their lateral parameter (D) value are identified with a square.

Figure 9.- shows a plot with a linear representation of the adsorbed mass versus lateral displacement for the adsorbent material MIL-101(Cr). Molecules whose adsorbed mass has been corroborated by another analytical technique to determine the equation of the calibration line are identified with a circle, while molecules whose mass has been determined by the extrapolation of their lateral parameter (D) value are identified with a square.

**PREFERRED EMBODIMENTS OF THE INVENTION**

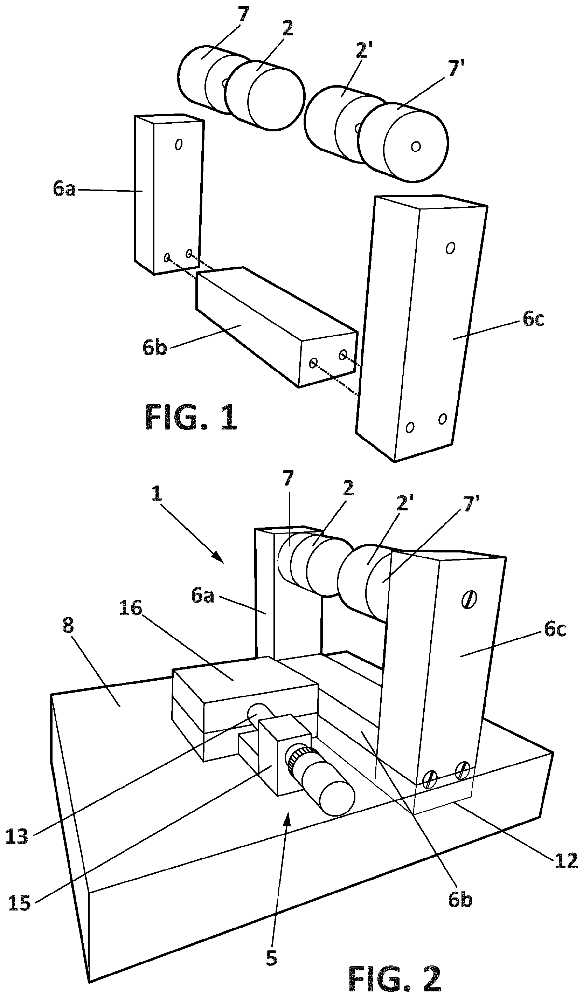

Figures 1 to 3 show a preferred embodiment of a device (1) for measuring the absorption capacity of adsorbent materials of substances dissolved in a liquid medium according to the invention.

The device (1) is provided with at least one and preferably two permanent magnets (marked as 2 and 2') arranged in a facing configuration and with a reduced distance between them (3-10 cm) to concentrate the field lines in the confined zone between both magnets (2, 2'). A sufficiently high field gradient is generated away from this intermediate zone, so that the test tube (3) containing particles (4) of the magnetically active porous material can be placed at the boundary of this zone. There, the magnetic field gradient will be at its maximum value.

The high magnetic field gradient at the lower boundary between the inter-magnet zone and the outside exerts a sufficiently strong attraction on the particles (4) of the magnetically active adsorbent or porous material (paramagnetic or functionalised with ferromagnetic particles), so that they are retained and do not fall down to the bottom.

Additionally, the device (1) comprises a lateral displacement actuator (5) to modify and measure the relative distance of the porous material from the area of maximum magnetic field gradient. This actuator (5) is adapted to allow homogeneous, smooth displacement and an accuracy of, at least, one tenth of a millimetre.

The value of the magnetic field and its gradient shall decrease as the test tube (3) is moved away from the magnet surface. The value of the distance at which the last particle falls down, which depends, as described above, on the balance of the forces of gravity, the attraction exerted by the magnetic field and the buoyancy effect of the solvent, will be characteristic of each porous material and of the amount of adsorbate captured.

The measurement starts with the test tube (3) containing the liquid in the area of the maximum field gradient (bottom part of the permanent magnet pole) and the porous material or a suspension of it is added to the test tube (3). The adsorbent material (4) is retained in the area where the field gradient is at its maximum and then the actuator (5) is used to increase the distance (D) of the test tube (3) with respect to this area of maximum magnetic field gradient until the necessary separation is reached for the particles of the material to fall. This distance value is the one that provides, after calibration of the equipment, a parameter directly linked to the percentage of mass adsorbed by the porous material (4). The calibration of the equipment is carried out for each adsorbent material and requires several preparations of the adsorbent material with different percentages of known mass captured. Both the calibration measurements and the adsorption quantification measurements must be carried out at the same temperature.

For the construction of the device (1) as shown in Figure 1, three pieces (6a, 6b, 6c) of magnetic steel or ferromagnetic metal capable of condensing the magnetic field lines of a magnet are used. These three are fixed together in a U-shaped arrangement, with the longest one acting as the base, configuring a U-shaped support of ferromagnetic material. Two circular spacers (7, 7') of ferromagnetic steel or other ferromagnetic metal/alloy are attached to the upper inner ends of the U-shape with a screw. Two circular permanent magnets (2, 2') are attached to the spacers (7, 7') by the magnetic attraction force itself.

A methacrylate support (8) is provided with an indentation (12) of the width and length of the metal support in a U-shape, so that the metal U-shaped support can be positioned and cannot move or shift.

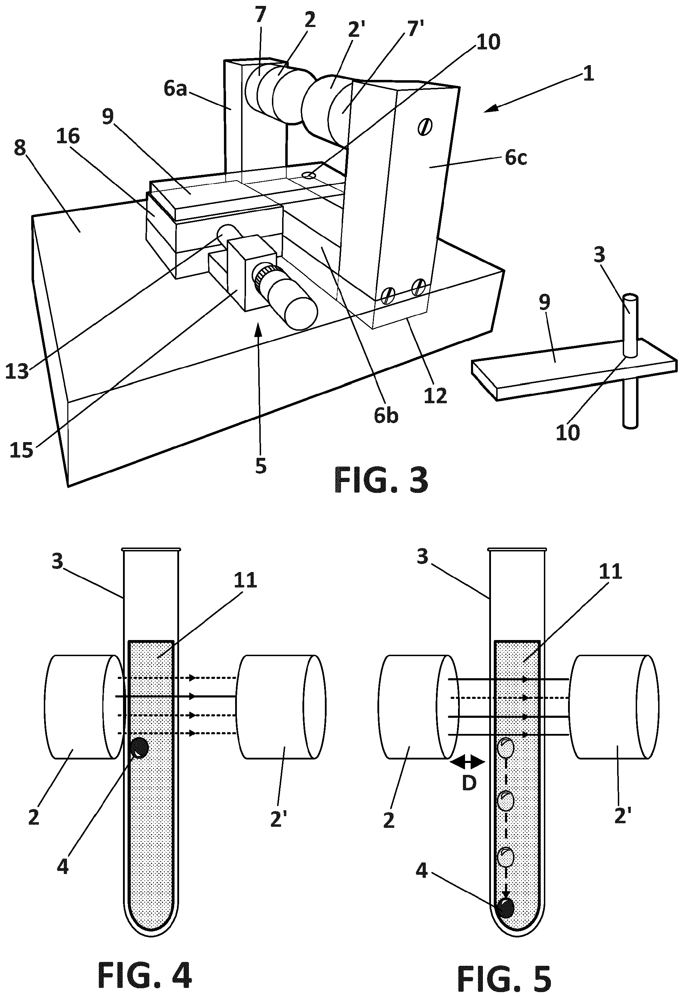

A plate of methacrylate (or any other non-ferromagnetic material) (9) with a hole (10) is fixed on the shaft (13) of the actuator (5), in such a way that when the test tube (3) is inserted into this hole (10), it becomes firmly attached to the surface of a magnet (2), as shown in Figure 4 at the beginning of the measurement, but it can also be displaced laterally.

The test tube (3) is positioned with respect to the magnets (2, 2'), so that the level of the liquid (11) contained inside the test tube (3), is above the lower edge of the magnet (2) and the bottom of the tube, in this case, below the lower edge of the magnet. In this way the test tube (3) is within the same plane defined by the U-shaped support and the magnets (2, 2'), and in contact to one of the permanent magnets, as shown in Figure 4.

The test tube (3) is filled with water or any other liquid (11) and placed in the measuring device (1) attached to one of the permanent magnets (2, 2'). Subsequently, particles of the magnetically active adsorbent material are dropped, either directly or contained in a suspension. The buoyancy effect exerted by the liquid (11) medium decreases the force of gravity and slows down the rate of their fall, allowing the magnetic field of the permanent magnet to retain the particles in the area of the test tube (3) adjacent to the lower edge of the permanent magnet (2). Once attached, the shaft (13) of the actuator (5) is used to slowly pull the test tube (3) away from the surface of the magnet (2), as represented in Figure 5.

As the distance D between the attached particles and the magnets increases, as shown in Figure 5, the gradient of the magnetic field allowing these particles to avoid falling down to the bottom of the tube decreases. At some point, there will be a distance at which the magnetic force is too small to counteract the weight of the porous material, causing it to descend. The distance *D* at which the last of the particles fall from the adsorbent material, a value obtained directly from the linear actuator, is the parameter that allows the quantification of the adsorption. As the adsorbent material (4) captures a larger mass of adsorbate, the distance at which this fall occurs decreases.

## Claims

1. Method for measuring the absorption capacity of adsorbent materials to absorb substances dissolved in a liquid medium, comprising:

   providing a recipient (3) containing a liquid medium with magnetically active particles (4) of an adsorbent material, and a substance dissolved in the liquid medium,
   placing the recipient (3) in proximity to or in contact with at least one permanent magnet (2, 2'), so that the magnetically active particles (4) are retained in the liquid medium by the magnetic attraction of the permanent magnet (2, 2'),
   increasing the separation distance between the permanent magnet (2, 2') and the recipient (3) until the magnetic attraction of the permanent magnet (2, 2') no longer holds the paramagnetic particles (4),
   measuring the separation distance between the permanent magnet (2, 2') and the recipient (3) at which all or a predetermined amount of the magnetically active particles (4) have fallen down by gravity to the bottom of the recipient (3), and

determining, by a linear correlation, the mass of substance captured by the magnetically active particles (4) based on the measured separation distance.

2. Method according to claim 1, wherein the linear correlation for determining the mass of substance captured is the following:

$$M_{M(F)} = A' \cdot D - B'$$

where: ($M_{M(F)}$) is the mass of adsorbate captured per weight formula of the adsorbent; (D) is the lateral separation distance between the permanent magnet and the recipient; (A' and B') are constants determined through a calibration procedure.

3. Method according to claim 2, wherein the constants A' and B' are obtained for each adsorbent through a calibration procedure in which D parameter is measured on several samples of the adsorbent containing known adsorbate mass percentages with respect to the adsorbent mass, and wherein the linear fitting of the obtained Mass percentage vs. D representation provides the values of A' from the slope of the fitting to a straight line and B' from the extrapolated value of the straight line at D = 0.

4. Method according to any of the preceding claims, wherein the recipient (3) is placed between two permanent magnets (2, 2') facing each other and such that great $H \cdot \nabla H$ product values are achieved at the bottom part of the space between the magnets (H being the magnetic field and $\nabla H$, being the gradient of the magnetic field).

5. Method according to any one of the preceding claims, wherein increasing the separation distance between the permanent magnet (2, 2') and the recipient (3) is carried out by keeping the permanent magnet (2, 2') in a fixed position and moving the recipient (3) linearly with respect to the permanent magnet in a direction orthogonal to the permanent magnet.

6. Method according to any one of the preceding claims, wherein the absorbing material is a metal-organic framework (MOF).

7. Method according to any one of the preceding claims, wherein the permanent magnet is cylindrical.

8. Method according to any of the previous claims, where the recipient (3) is elongated and is positioned in front of the permanent magnet (2, 2'), in such a way that the bottom of the recipient is outside the magnetic field generated by the permanent magnet (2, 2').

9. Device (1) for measuring the absorption capacity of adsorbent materials of substances dissolved in a liquid medium, comprising:

a ferromagnetic material support and two permanent hard magnets (2, 2') placed on the ferromagnetic material support in such a way that they face each other and with a separation space between them,
an elongated recipient for containing a liquid medium containing magnetically active particles (4) of an absorbing material, and a substance dissolved in the liquid medium,
and a platform configured to retain the container between the two permanent hard magnets (2, 2'), and so that the bottom of the recipient is outside the magnetic field generated by the magnets,
a mechanical actuator (5) coupled to the platform and configured to move the recipient relative to the permanent magnets (2, 2'),
means for measuring the separation distance between the recipient and one of the permanent magnets (2, 2'), and
computing means adapted to determine the mass of substance captured by the linear correlation of claim 2 or claims 2 and 3.

10. Device (1) according to claim 9, wherein the ferromagnetic material support has a U-shaped configuration, and wherein the elongated recipient is positioned within a plane defined by the U-shaped support.

**Patentansprüche**

1. Verfahren zum Messen der Absorptionskapazität von Adsorptionsmaterialien zum Absorbieren von in einem flüssigen Medium gelösten Substanzen, aufweisend:

   einen Behälter (3) bereitstellen, der ein flüssiges Medium mit magnetisch aktiven Partikeln (4) eines Adsorptionsmaterials und eine in dem flüssigen Medium gelöste Substanz enthält,
   den Behälter (3) in der Nähe oder in Kontakt mit mindestens einem Permanentmagneten (2, 2') anordnen, so dass die magnetisch aktiven Partikel (4) durch die magnetische Anziehungskraft des Permanentmagneten (2, 2') im flüssigen Medium zurückgehalten werden,
   den Trennungsabstand zwischen dem Permanentmagneten (2, 2') und dem Behälter (3) erhöhen, bis die magnetische Anziehungskraft des Permanentmagneten (2, 2') die paramagnetischen Partikel (4) nicht mehr hält,
   den Trennabstand zwischen dem Permanentmagneten (2, 2') und dem Behälter (3) messen, bei dem alle oder eine vorbestimmte Menge der magnetisch aktiven Partikel (4) durch die Schwerkraft auf den Boden des Behälters (3) gefallen sind, und
   durch eine lineare Korrelation anhand des gemessenen Abstands die Masse an Substanz bestimmen, die von den magnetisch aktiven Partikeln (4) aufgefangen wurde.

2. Verfahren nach Anspruch 1, wobei die lineare Korrelation zum Bestimmen der Masse der aufgefangenen Substanz wie folgt lautet:

$$M_{M(F)} = A' \cdot D - B'$$

   wobei: $(M_{M(F)})$ die pro Gewichtsformel des Adsorbens aufgefangene Masse des Adsorbats ist; (D) der seitliche Abstand zwischen dem Permanentmagneten und dem Behälter ist; ($A'$ und B') Konstanten sind, die durch ein Kalibrierungsverfahren bestimmt werden.

3. Verfahren nach Anspruch 2, wobei die Konstanten $A'$ und $B'$ für jedes Adsorptionsmittel durch ein Kalibrierungsverfahren ermittelt werden, bei dem der Parameter $D$ an mehreren Proben des Adsorbens gemessen wird, die bekannte Adsorbatmassenanteile in Bezug auf die Adsorbensmasse enthalten, und wobei die lineare Anpassung der erhaltenen Darstellung Massenanteil vs. D die Werte von $A'$ aus der Steigung der Anpassung an eine gerade Linie und $B'$ aus dem extrapolierten Wert der Geraden bei $D$ = 0 liefert.

4. Verfahren nach einem der vorangehenden Ansprüche, wobei der Behälter (3) zwischen zwei einander gegenüberliegenden Permanentmagneten (2, 2') so angeordnet ist, dass im unteren Teil des Raums zwischen den Magneten große $H \cdot VH$-Produktwerte erreicht werden (wobei $H$ das Magnetfeld und V$H$ der Gradient des Magnetfelds ist).

5. Verfahren nach einem der vorangehenden Ansprüche, wobei das Vergrößern des Abstands zwischen dem Permanentmagneten (2, 2') und dem Empfänger (3) dadurch erfolgt, dass der Permanentmagnet (2, 2') in einer festen Position gehalten wird und der Empfänger (3) linear in Bezug auf den Permanentmagneten in einer Richtung orthogonal zum Permanentmagneten bewegt wird.

6. Verfahren nach einem der vorangehenden Ansprüche, wobei das absorbierende Material ein metallorganisches Gerüst (engl. metal-organic framework, MOF) ist.

7. Verfahren nach einem der vorangehenden Ansprüche, wobei der Permanentmagnet zylindrisch ist.

8. Verfahren nach einem der vorangehenden Ansprüche, wobei der Behälter (3) länglich ist und vor dem Permanentmagneten (2, 2') positioniert ist, so dass sich der Boden des Behälters außerhalb des vom Permanentmagneten (2, 2') erzeugten Magnetfeldes befindet.

9. Vorrichtung (1) zum Messen der Absorptionskapazität von Adsorptionsmaterialien von in einem flüssigen Medium gelösten Substanzen, aufweisend:

   einen Träger aus ferromagnetischem Material und zwei Permanentmagnete (2, 2'), die so auf dem Träger aus ferromagnetischem Material angeordnet sind, dass sie einander gegenüberliegen und einen trennenden Abstand voneinander haben,

einen länglichen Behälter zum Aufnehmen eines flüssigen Mediums, das magnetisch aktive Partikel (4) eines absorbierenden Materials und eine in dem flüssigen Medium gelöste Substanz enthält, und eine Plattform, die so konfiguriert ist, dass sie den Behälter zwischen den beiden Permanentmagneten (2, 2') hält, so dass der Boden des Behälters außerhalb des von den Magneten erzeugten Magnetfeldes liegt, einen mechanischen Aktuator (5), der mit der Plattform gekoppelt und so konfiguriert ist, dass er den Behälter relativ zu den Permanentmagneten (2, 2') bewegt, Mittel zum Messen des trennenden Abstands zwischen dem Behälter und einem der Permanentmagnete (2, 2'), und eine Berechnungseinrichtung, die dazu ausgelegt ist, die Masse der Substanz zu bestimmen, die durch die lineare Korrelation gemäß Anspruch 2 oder den Ansprüchen 2 und 3 erfasst wird.

10. Vorrichtung (1) nach Anspruch 9, wobei der ferromagnetische Materialträger eine U-förmige Konfiguration aufweist und wobei der längliche Behälter innerhalb einer durch den U-förmigen Träger definierten Ebene positioniert ist.

**Revendications**

1. Procédé pour mesurer la capacité d'absorption de matériaux adsorbants à absorber des substances dissoutes dans un milieu liquide, comprenant :

la fourniture d'un récipient (3) contenant un milieu liquide avec des particules magnétiquement actives (4) d'un matériau adsorbant, et une substance dissoute dans le milieu liquide,
le placement du récipient (3) à proximité de ou en contact avec au moins un aimant permanent (2, 2'), de sorte que les particules magnétiquement actives (4) soient retenues dans le milieu liquide par l'attraction magnétique de l'aimant permanent (2, 2'),
l'augmentation de la distance de séparation entre l'aimant permanent (2, 2') et le récipient (3) jusqu'à ce que l'attraction magnétique de l'aimant permanent (2, 2') ne maintienne plus les particules paramagnétiques (4),
la mesure de la distance de séparation entre l'aimant permanent (2, 2') et le récipient (3) à laquelle la totalité ou une quantité prédéterminée des particules magnétiquement actives (4) sont tombées par gravité au fond du récipient (3), et
la détermination, par une corrélation linéaire, de la masse de substance capturée par les particules magnétiquement actives (4) sur la base de la distance de séparation mesurée.

2. Procédé selon la revendication 1, dans lequel la corrélation linéaire pour déterminer la masse de substance capturée est la suivante :

$$M_{M(F)} = A' . D - B'$$

où : $(M_{M(F)})$ est la masse d'adsorbat capturé par formule de poids de l'adsorbant ; $(D)$ est la distance de séparation latérale entre l'aimant permanent et le récipient ; $(A'$ et $B')$ sont des constantes déterminées par une procédure d'étalonnage.

3. Procédé selon la revendication 2, dans lequel les constantes $A'$ et $B'$ sont obtenues pour chaque adsorbant par une procédure d'étalonnage dans laquelle le paramètre $D$ est mesuré sur plusieurs échantillons de l'adsorbant contenant des pourcentages massiques connus d'adsorbat par rapport à la masse d'adsorbant, et dans lequel l'ajustement linéaire de la représentation du pourcentage massique obtenu en fonction de $D$ fournit les valeurs de $A'$ à partir de la pente de l'ajustement à une ligne droite et de $B'$ à partir de la valeur extrapolée de la ligne droite à $D = 0$.

4. Procédé selon l'une des revendications précédentes, dans lequel le récipient (3) est placé entre deux aimants permanents (2, 2') se faisant face et de sorte que de grandes valeurs du produit $H \cdot \nabla H$ soient obtenues à la partie inférieure de l'espace entre les aimants ($H$ étant le champ magnétique et $\nabla H$ étant le gradient du champ magnétique).

5. Procédé selon l'une quelconque des revendications précédentes, dans lequel l'augmentation de la distance de séparation entre l'aimant permanent (2, 2') et le récepteur (3) est réalisée en maintenant l'aimant permanent (2, 2') dans une position fixe et en déplaçant le récepteur (3) de manière linéaire par rapport à l'aimant permanent dans une direction orthogonale à l'aimant permanent.

6. Procédé selon l'une quelconque des revendications précédentes, dans lequel le matériau absorbant est un réseau métalloorganique (MOF).

7. Procédé selon l'une quelconque des revendications précédentes, dans lequel l'aimant permanent est cylindrique.

8. Procédé selon l'une des revendications précédentes, dans lequel le récipient (3) est allongé et est positionné devant l'aimant permanent (2, 2'), de manière à ce que le fond du récipient se trouve à l'extérieur du champ magnétique généré par l'aimant permanent (2, 2').

9. Dispositif (1) pour mesurer la capacité d'absorption de matériaux adsorbants de substances dissoutes dans un milieu liquide, comprenant :

   un support de matériau ferromagnétique et deux aimants permanents durs (2, 2') placés sur le support de matériau ferromagnétique de manière à se faire face et avec un espace de séparation entre eux,
   un récipient allongé pour contenir un milieu liquide contenant des particules magnétiquement actives (4) d'un matériau absorbant et une substance dissoute dans le milieu liquide,
   et une plate-forme configurée pour retenir le récipient entre les deux aimants permanents durs (2, 2'), et de sorte que le fond du récipient se trouve à l'extérieur du champ magnétique généré par les aimants,
   un actionneur mécanique (5) couplé à la plate-forme et configuré pour déplacer le récipient par rapport aux aimants permanents (2, 2'),
   des moyens pour mesurer la distance de séparation entre le récipient et l'un des aimants permanents (2, 2'), et
   des moyens de calcul adaptés pour déterminer la masse de substance capturée par la corrélation linéaire de la revendication 2 ou des revendications 2 et 3.

10. Dispositif (1) selon la revendication 9, dans lequel le support de matériau ferromagnétique a une configuration en forme de U, et dans lequel le récipient allongé est positionné dans un plan défini par le support en forme de U.

**FIG. 1**

**FIG. 2**

**FIG. 3**

**FIG. 4**

**FIG. 5**

FIG. 6

EP 4 481 364 B1

FIG. 7

EP 4 481 364 B1

FIG. 8

EP 4 481 364 B1

FIG. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **BARROSO NAGORE et al.** Magnetic sustentation as an adsorption characterization technique for paramagnetic metal-organic frameworks. *Communications Chemistry*, 05 January 2023, vol. 6 (1), https://www.nature.com/articles/s420014-022-00799-w

- **BARROSO GARCFA NAGORE**. *A STUOY OF METAL-ORGANIC FRAMEWORK SORPTION PHENOMENA IN SOLUTION*, 04 May 2023, 1-197, https://addi.ehu.es/handle/10810/61382